# FASCICULE DE BREVET EUROPEEN

(11) **EP 3 750 037 B1**
(45) Date de publication et mention de la délivrance du brevet: **18.05.2022**
(21) Numéro de dépôt: 19710012.6
(22) Date de dépôt: 24.01.2019
(51) Int. Cl.: G06F 3/038, G06F 3/0484, G06F 3/0488, G06F 3/041, B60K 35/00, B60K 37/06

(54) **SYSTEME ET PROCEDE DE FILTRAGE DES COMMANDES D'UN SYSTEME MULTI-ECRANS TACTILES DE VEHICULE**
SYSTEM UND VERFAHREN ZUM FILTERN DER STEUERUNGEN EINES SYSTEMS MIT MEHREREN BERÜHRUNGSBILDSCHIRMEN EINES FAHRZEUGS
SYSTEM AND METHOD FOR FILTERING THE CONTROLS OF A MULTI-TOUCH-SCREEN SYSTEM OF A VEHICLE

(30) Priorité: 09.02.2018 FR 1851131
(43) Date de publication de la demande: 16.12.2020
(73) Titulaire: PSA Automobiles SA, 78300 Poissy (FR)
(72) Inventeur: LAINE, Vincent, 78340 LES CLAYES SOUS BOIS (FR); DEBONNET, Michael, 92310 SEVRES (FR); FOUQUEREAU, Nicolas, 91640 FONTENAY LES BRIIS (FR)
(86) Numéro de dépôt international: PCT/FR2019/050155
(87) Numéro de publication internationale: WO 2019/155140

(56) Documents cités:
- CN-A- 106 648 232
- US-A1- 2013 246 861
- US-A1- 2017 255 441

## Description

L'invention concerne, de façon générale, le domaine de l'affichage dans un véhicule automobile et vise plus particulièrement un procédé de filtrage des commandes d'un système multi-écrans tactiles installé dans un véhicule automobile.

De nos jours, les véhicules automobiles sont généralement équipés d'un écran d'affichage positionné au niveau du tableau de bord du véhicule et permettant l'affichage de diverses fonctionnalités du véhicule, telles qu'un système de navigation, un état de la consommation du véhicule ou bien encore des fonctions multimédia par exemple.

En pratique, un tel écran d'affichage est contrôlé manuellement par le conducteur, au moyen d'une série de boutons de commande intégrés au tableau de bord ou par l'intermédiaire de fonctions tactiles directement intégrées à de tels écrans. A ce titre, il est notamment connu des systèmes multi-écrans permettant à la fois d'intégrer l'ensemble des fonctions à un écran tactile et d'organiser ou répartir les commandes par exemple selon le type de fonctions (de conduite ou multimédia par exemple).

De manière connue, de telles surfaces tactiles présentent généralement une technologie capacitive, dans laquelle la surface tactile comprend une plaque de verre conductrice et un film supplémentaire accolé à la plaque de verre et configuré pour accumuler des charges électriques. Le contact du doigt de l'utilisateur sur la surface tactile transfère une partie des charges électriques dans le doigt de l'utilisateur, générant un déficit de charge local. Une pluralité de capteurs positionnés aux quatre coins de la plaque, permettent de localiser la position du doigt de l'individu, permettant ainsi d'identifier la fonction recherchée par l'utilisateur.

Cependant, dans le cas d'un système multi-écrans présentant une technologie capacitive, la pluralité d'écrans tactiles peut entrainer des contacts involontaires avec un écran non concerné par la commande visée par l'utilisateur.

A ce titre, il est connu du document US 20160378234 un dispositif informatique, de type ordinateur portable, comprenant un écran d'affichage, un clavier et un pavé tactile de commande, permettant la commande de l'ordinateur. Un tel dispositif comprend en outre un module d'entrée/sortie se présentant par exemple sous la forme d'un écran tactile permettant l'accès à une pluralité de boutons de commandes raccourcis.

Cependant, lorsqu'un utilisateur manipule par exemple l'écran d'affichage, sa main peut involontairement venir en contact ou effleurer le module d'entrée/sortie comprenant les raccourcis de commande, ce qui présente un inconvénient majeur. En effet, le contact involontaire de la main de l'utilisateur avec le module d'entrée/sortie peut entrainer l'activation involontaire d'une fonction non souhaitée. Ceci est particulièrement vrai dans le cas d'un écran tactile positionné sensiblement à l'horizontal par rapport à un écran vertical, cas dans lequel un utilisateur aura tendance à poser sa main ou son poignet sur l'écran horizontal, comme dans le cas du dispositif informatique présenté dans le document US 20160378234.

Afin de pallier cet inconvénient, certains systèmes intègrent un module non tactile entre deux écrans, permettant à la fois à l'utilisateur de reposer ses doigts ou sa main et de séparer de tels écrans, de manière à limiter les risques de contacts involontaires. Cependant, de tels systèmes sont inesthétiques et ne permettent pas de bénéficier d'une surface multi-écrans tactile continue.

Il est également connu une technologie résistive, dans laquelle l'écran tactile comprend une plaque de verre conductrice recouverte d'un film plastique également conducteur. Ces deux couches sont séparées par de micro plots, de manière à éviter tout contact à l'état de repos. Lorsqu'un utilisateur souhaite utiliser l'écran tactile, celui-ci applique une pression avec un stylet dédié ou son doigt sur le film plastique. Une telle pression permet de mettre en contact le film plastique avec la plaque de verre, ce qui induit un courant électrique, permettant la commande des différentes fonctions.

Cependant, de telles technologies sont coûteuses à mettre en oeuvre et ne permettent pas toujours d'empêcher l'actionnement d'une fonction involontairement, notamment si l'utilisateur pose sa main sur un écran pour en commander un autre. De plus, les pressions répétées peuvent altérer la conductivité électrique entre les deux couches, entrainant avec le temps une baisse de l'efficacité des fonctions tactiles.

Sont également connus le document US2017/255441 un système et procédé pour faire fonctionner un ensemble d'affichage multiple, le document US2013/246861 un procédé, appareil et produit de programme informatique pour l'interprétation des entrées utilisateur et l'atténuation des erreurs d'entrée, et le document CN106648232 une méthode, dispositif et terminal pour empêcher le faux déclenchement des touches tactile.

L'invention vise donc à pallier au moins en partie ces inconvénients en proposant un procédé de filtrage des commandes d'un système multi-écrans tactiles simple et efficace, permettant de limiter les risques de contact involontaire avec un écran tactile non visé par une action d'un utilisateur.

Plus précisément, pour parvenir à ce résultat, la présente invention concerne un procédé de filtrage selon la revendication 1.

Un tel procédé de filtrage permet avantageusement de limiter les risques d'activation involontaire d'une fonction lorsqu'un utilisateur touche le deuxième écran tactile en manipulant le premier écran tactile.

De préférence, le seuil prédéterminé est compris entre 200 millisecondes et 1 seconde, permettant un filtrage tout en assurant un affichage quasi instantané des fonctions sélectionnées.

Avantageusement, le procédé comprend précédemment à l'étape d'autorisation d'activation de la fonction, par le boîtier de contrôle, une étape de comparaison par le boîtier de contrôle de la première durée avec ledit seuil prédéterminé.

De préférence, le deuxième module de commande comprenant une pluralité de zones tactiles, ledit procédé comprend postérieurement à l'étape de détection d'une demande d'activation d'une fonction sur le deuxième module de commande, une étape de détection d'une zone tactile comprenant ladite fonction. Une telle étape permet l'adaptation du seuil prédéterminé en fonction du contact sur une zone présentant un risque plus ou moins élevé de contact involontaire.

De manière avantageuse, le procédé comprend postérieurement à l'étape de détection d'une zone tactile comprenant ladite fonction, une étape de détermination dudit seuil prédéterminé en fonction de ladite zone tactile détectée.

L'invention concerne également un système selon la revendication 6.

De préférence, le deuxième module de commande comprenant une pluralité de zones tactiles, ledit système de commande est en outre configuré pour détecter une zone tactile comprenant ladite fonction.

Avantageusement, le boîtier de contrôle est en outre configuré pour déterminer le seuil prédéterminé en fonction de ladite zone tactile détectée.

De préférence, le boîtier de contrôle est en outre configuré pour comparer la première durée avec ledit seuil prédéterminé.

L'invention a enfin pour objet un véhicule automobile comprenant un système de commande tel que décrit précédemment.

D'autres caractéristiques et avantages de l'invention apparaîtront à la lecture de la description détaillée des formes de réalisation de l'invention, données à titre d'exemple uniquement, et en référence aux dessins qui montrent :
- la figure 1, une représentation schématique d'un véhicule automobile et d'un repère de définition d'un tel véhicule,
- la figure 2, une représentation schématique d'un exemple de positionnement d'un système de commande selon l'invention dans l'habitacle du véhicule de la figure 1,
- la figure 3, une représentation schématique d'un système de commande selon un exemple de représentation de l'invention,
- les figures 4A et 4B, deux représentations schématiques des liaisons électroniques possibles entre un boîtier de contrôle et deux modules de commande du système de la figure 3.
- la figure 5, une représentation schématique des différents états d'un module de commande du système de commande de la figure 3,
- la figure 6, une représentation graphique des états d'un premier module de commande et d'un deuxième module de commande du système de commande de la figure 3, ainsi qu'un graphique représentant les fonctions effectivement validées par un boîtier de contrôle du système de commande de la figure 3, et
- la figure 7, un schéma bloc des étapes d'un procédé de filtrage selon un exemple de réalisation de l'invention.

Dans ce qui va suivre, les formes de réalisation décrites s'attachent plus particulièrement à une mise en oeuvre du procédé de filtrage selon l'invention au sein d'un véhicule automobile. Cependant, toute mise en œuvre dans un contexte différent, en particulier dans tout type de véhicule, est également visée par la présente invention.

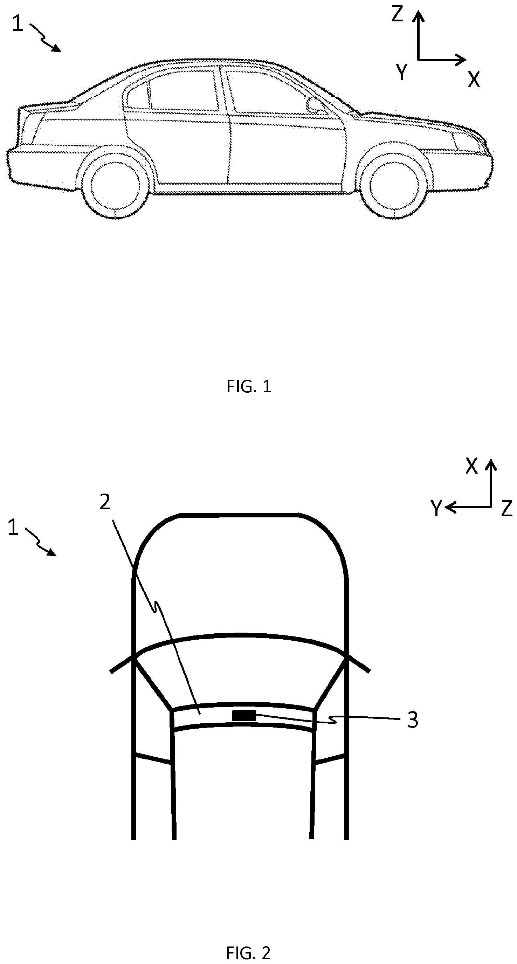

En référence à la figure 1, un tel véhicule 1 automobile s'étend longitudinalement selon un axe X, verticalement selon un axe Z et transversalement selon un axe Y, de manière à former un repère orthogonal (X, Y, Z). Ainsi par le terme horizontal, on entend un objet s'étendant dans le plan (X, Y). De manière similaire, le terme vertical désigne un objet s'étendant dans le plan (Y, Z).

En référence à la figure 2, un tel véhicule 1 comprend une planche de bord 2 et un système de commande 3 intégré à la planche de bord 2 du véhicule 1. Un tel système de commande 3 permet la commande d'une pluralité de fonctions du véhicule 1, par exemple les fonctions multimédias, les fonctions de conduite, comme la consommation en carburant du véhicule 1, ou bien encore les fonctions de navigation.

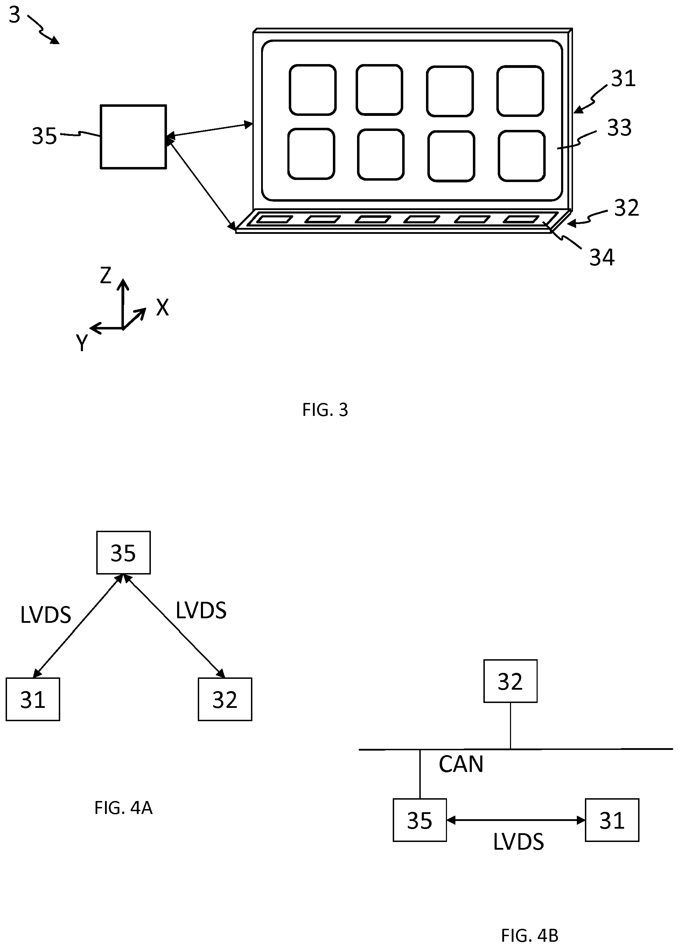

Pour cela, en référence à la figure 3, le système de commande 3 comprend un premier module de commande 31 et un deuxième module de commande 32.

Le premier module de commande 31 comprend un premier écran tactile 33, présentant par exemple une technologie dite « capacitive ». Une telle technologie est connue de l'homme du métier et ne sera pas décrite plus en détails dans ce document. Le premier écran tactile 33, également désigné « écran haut », est par exemple intégré à la planche de bord 2 du véhicule 1, c'est-à-dire que le premier écran tactile 33 s'étend sensiblement verticalement dans l'habitacle du véhicule 1. Le deuxième module de commande 32 comprend un deuxième écran tactile 34, également désigné « écran bas » faisant par exemple saillie de la planche de bord 2 du véhicule 1. Ainsi le deuxième écran tactile 34 s'étend dans cet exemple sensiblement horizontalement dans l'habitacle du véhicule 1. De tels écrans tactiles 33, 34 sont dans cet exemple similaires à un écran tactile classique généralement intégré de nos jours dans un véhicule 1 automobile et permettent chacun la commande d'une pluralité de fonctions du véhicule 1. De manière alternative, le deuxième écran tactile 34 peut être configuré pour permettre la commande directe de certaines fonctions du premier écran tactile 33 au moyen de raccourcis de commande par exemple.

A ce titre, le premier écran tactile 33 et le deuxième écran tactile 34 sont chacun configuré pour afficher une pluralité d'icônes, comme cela est représenté sur la figure 3. Chaque icône est dans cet exemple configurée pour permettre la commande d'une fonction de la pluralité de fonctions du véhicule 1 ou l'accès par exemple à des menus déroulants, permettant l'accès à une pluralité des fonctions d'un même type.

Pour cela, en référence aux figures 3, 4A et 4B, le système de commande 3 comprend en outre un boîtier de contrôle 35 relié électroniquement à la fois au premier module de commande 31 et au deuxième module de commande 32. Une telle liaison électronique est, selon une première forme de réalisation, une liaison de type LVDS (Figure 4A), signifiant « Low Voltage Differential Signaling » en langue anglaise et désignant un lien de transmission différentielle basse-tension. Une telle liaison LVDS, connue en soi, permet d'autoriser les échanges d'informations entre le premier module de commande 31 et le deuxième module de commande 32 via un réseau de communication filaire bidirectionnel. Selon une forme de réalisation alternative, le boîtier de contrôle 35 peut être relié au premier module de commande 31 via une telle liaison LVDS et au deuxième module de commande 32, via une liaison de type CAN (figure 4B), signifiant « Controller Area Network » en langue anglaise et désignant une voie de communication unique reliée en série à une pluralité d'unités de communication.

Le boîtier de contrôle 35 est ainsi configuré pour commander une fonction activée par un utilisateur soit sur le premier module de commande 31, soit sur le deuxième module de commande 32. Selon l'invention, le boîtier de contrôle 35 est de préférence configuré pour autoriser une commande sélectionnée sur le deuxième module de commande 32 si et seulement si l'intervalle de temps entre la demande d'activation d'une fonction sur le deuxième module de commande 32 et la fin de l'activation d'une fonction sur le premier module de commande 31 est supérieur ou égal à une première durée T1 prédéterminée, par exemple depuis une durée supérieure ou égale à 500 ms, et si une demande d'activation d'une fonction a été détectée sur le deuxième module de commande 32 pendant une deuxième durée T2 au cours de laquelle aucune action n'a été détectée sur le premier module de commande 31.

Pour cela, selon une forme de réalisation de l'invention, chacun du premier module de commande 31 et du deuxième module de commande 32 est configuré pour envoyer périodiquement, par exemple toutes les 20 ms, au boîtier de contrôle 35, via la liaison électronique, un message comprenant une pluralité d'informations relatives à un état du premier module de commande 31 ou du deuxième module de commande 32 et donc relatif à l'état du premier écran tactile 33 ou du deuxième écran tactile 34. Le message envoyé par le premier module de commande 31 est désigné premier message d'état et le message envoyé par le deuxième module de commande 32 est désigné deuxième message d'état ou troisième message d'état suivant l'instant auquel un tel message est envoyé.

En effet, le boîtier de contrôle 35 est configuré pour déterminer, au moyen du message envoyé par chacun des modules de commande 31, 32, à la fois si l'écran tactile 33, 34 du module de commande 31, 32 concerné se trouve dans un état actif ou inactif (c'est-à-dire si un doigt ou un stylet dédié se trouve en contact de l'écran tactile), la position de l'appui, à partir de la technologie par exemple capacitive de l'écran tactile, ainsi qu'une datation de l'appui, permettant de déterminer si l'appui est en cours, s'il vient de démarrer, s'il vient d'être stopper ou depuis combien de temps aucun appui n'a été détecté.

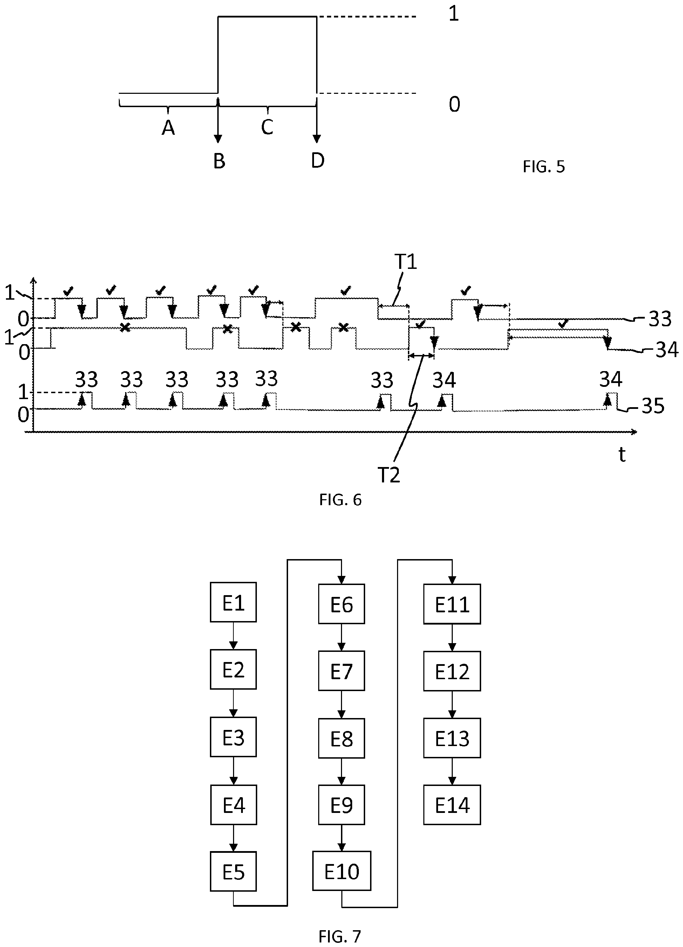

Ainsi, selon l'invention, en référence à la figure 5, le boîtier de contrôle 35 est configuré pour déterminer l'état de chaque écran tactile 33, 34 parmi quatre états définis en suivant :
- un premier état A dit « état 0 », également désigné « état inactif », correspondant à aucun appui en cours,
- un deuxième état B dit « état 0 vers 1 », également désigné « état en cours d'activation », correspondant au démarrage d'un appui (l'utilisateur vient de déposer son doigt par exemple sur l'écran tactile 33, 34),
- un troisième état C dit « état 1 », également désigné « état actif », correspondant à un appui en cours, et
- un quatrième état D dit « état 1 vers 0 », également désigné « état en cours de désactivation », correspondant à une fin d'appui (l'utilisateur vient de retirer son doigt par exemple sur l'écran tactile 33, 34).

Le boîtier de contrôle 35 est en outre configuré pour déterminer l'évolution de l'état de chaque écran tactile 33, 34 à un instant donné t, c'est-à-dire pour un message donné par rapport à l'état déterminé à un instant t-1, c'est-à-dire pour un message envoyé précédemment.

Autrement dit, le boîtier de contrôle 35 est configuré pour valider une commande demandée sur le deuxième module de commande 32, si et seulement si :
- un quatrième état D a été détecté par le boîtier de contrôle 35 sur le premier écran tactile 33,
- un deuxième état B a été détecté par le boîtier de contrôle 35 sur le deuxième écran tactile 34 après une première durée T1,
- une telle première durée T1 entre le deuxième état B détecté sur le deuxième module de commande 32 et le quatrième état D précédemment détecté sur le premier module de commande 31 est supérieure ou égale à un seuil prédéterminé,
- un quatrième état D a été détecté par le boîtier de contrôle 35 sur le deuxième écran tactile 34 après une deuxième durée T2, initiée depuis la détection du deuxième état B sur le deuxième écran tactile 34, et
- aucun nouvel état n'a été détecté sur le premier module de commande 31 au cours d'une telle deuxième durée T2.

Une telle condition d'activation d'une fonction demandée sur le deuxième module de commande 32 permet avantageusement de limiter les commandes de fonctions involontaires dues par exemple au contact de la main d'un utilisateur sur le deuxième module de commande 32 lorsque celui-ci manipule en réalité le premier module de commande 31.

Selon une forme de réalisation, le boîtier de contrôle 35 est en outre configuré pour distinguer un appui réalisé sur une zone prédéfinie du deuxième écran tactile 34, par exemple pour distinguer un appui sur une portion centrale de l'écran d'un appui sur une bordure de l'écran. Une telle distinction permet dans cet exemple de modifier la première durée T1, afin par exemple d'autoriser plus rapidement l'activation d'une fonction demandée sur le deuxième écran tactile 34.

A titre d'exemple, si le boîtier de contrôle 35 détermine que l'appui sur le deuxième module de commande 32 est positionné au centre du deuxième écran tactile 34, alors le boîtier de contrôle 35 est configuré pour autoriser l'activation d'une commande demandée sur le deuxième écran tactile 34 si et seulement si la première durée T1 est supérieure ou égale à 500 ms. De même, si le boîtier de contrôle 35 détermine que l'appui sur le deuxième module de commande 32 est positionné en périphérie du deuxième écran tactile 34, alors le boîtier de contrôle 35 est configuré pour autoriser l'activation d'une commande demandée sur le deuxième écran tactile 34 si et seulement si la première durée T1 est supérieure ou égale à 200 ms, de manière à permettre un affichage plus rapide en fonction du risque de contact involontaire suivant la zone touchée sur le deuxième écran tactile 34.

La figure 6 présente un exemple d'autorisation par le boîtier de contrôle 35 d'une commande demandée sur le deuxième module de commande 32, en fonction de l'état du premier écran tactile 33 du premier module de commande 31. Dans cet exemple, la première courbe (c'est-à-dire la courbe tracée le plus en haut du graphique) représente une succession d'états actifs 1 et inactifs 0 du premier écran tactile 33, la deuxième courbe (c'est-à-dire la courbe tracée au centre du graphique) représente une succession d'états actifs 1 et inactifs 0 du deuxième écran tactile 34 et la troisième courbe (c'est-à-dire la courbe tracée le plus en bas du graphique) représente la succession de commandes effectivement prises en compte par le boîtier de contrôle 35.

Le système de commande 3 selon l'invention est ainsi configuré pour filtrer les appuis involontaires effectués par exemple sur le deuxième écran tactile 34, lorsque l'utilisateur manipule le premier écran tactile 33.

Il va dorénavant être présenté un procédé de filtrage des commandes d'un système de commande 3 tel que décrit précédemment, selon un mode de réalisation préféré de l'invention, en référence à la figure 7.

Un tel procédé de filtrage comprend tout d'abord une première étape E1 d'envoi, au boîtier de contrôle 35, par le premier module de commande 31 d'un premier message dit « premier message d'état » comprenant l'état (par exemple un état en cours d'activation, un état actif, un état en cours de désactivation ou un état inactif) du premier module de commande 31. Le premier message d'état comprend en outre une information concernant la position de l'appui sur le premier écran tactile 33, ainsi qu'une datation de l'appui, c'est-à-dire une information permettant de déterminer si l'appui est en cours, s'il vient de démarrer, s'il vient d'être stopper ou si aucun appui n'est en cours.

Un tel premier message d'état est alors reçu par le boîtier de contrôle 35, dans une étape E2, qui détermine l'état du premier module de commande 31, c'est-à-dire l'état du premier écran tactile 33, et détecte ainsi dans une étape E3 un état en cours de désactivation du premier module de commande 31, lorsque l'utilisateur commence à retirer son doigt initialement en appui sur une icône du premier écran tactile 33.

Après une première durée T1, par exemple comprise entre 200 millisecondes et 1 seconde, le procédé comprend une étape E4 d'envoi, au boîtier de contrôle 35, par le deuxième module de commande 32, d'un deuxième message, dit « deuxième message d'état » comprenant un état (par exemple un état en cours d'activation, un état actif, un état en cours de désactivation ou un état inactif) du deuxième module de commande 32.

Un tel deuxième message d'état est alors reçu par le boîtier de contrôle 35, dans une étape E5, qui détermine l'état du deuxième module de commande 32, c'est-à-dire l'état du deuxième écran tactile 34 et détecte ainsi dans une étape E6 un état en cours d'activation du deuxième module de commande 32, lorsque l'utilisateur commence à appuyer son doigt sur une icône du deuxième écran tactile 34.

Après une deuxième durée T2, le procédé comprend une nouvelle étape d'envoi E7, au boîtier de contrôle 35, par le deuxième module de commande 32, d'un troisième message, dit « troisième message d'état » comprenant un état (par exemple un état en cours d'activation, un état actif, un état en cours de désactivation ou un état inactif) du deuxième module de commande 32.

Un tel troisième message d'état est alors reçu par le boîtier de contrôle 35, dans une étape E8, qui détermine l'état du deuxième module de commande 32, c'est-à-dire l'état du deuxième écran tactile 34 et détecte ainsi dans une étape E9 un état en cours de désactivation du deuxième module de commande 32, lorsque l'utilisateur commence à retirer son doigt de l'icône sélectionnée sur le deuxième écran tactile 34.

Après la détection du deuxième message d'état (en cours d'activation) et du troisième message d'état (en cours de désactivation) du deuxième module de commande 32 après la deuxième durée T2, le procédé comprend une étape de la détection E10 d'une demande d'activation d'une fonction sur le deuxième module de commande 32. Selon un mode de réalisation préféré de l'invention, le boîtier de contrôle 35 détecte alors, dans une étape E11, une zone tactile sur le deuxième écran tactile 34 du deuxième module de commande 32 comprenant une telle fonction, et détermine, dans une étape E12, un seuil de durée auquel sera comparé la première durée T1 selon la zone tactile détectée (par exemple selon si la zone tactile se trouve en périphérie ou au centre du deuxième écran tactile 34).

Le boîtier de contrôle 35 compare ensuite, dans une étape E13 la première durée T1 entre la détection de l'état en cours de désactivation du premier module de commande 31 et la détection de l'état en cours d'activation du deuxième module de commande 32, avec le seuil prédéterminé, par exemple 500ms, et autorise, dans une étape E14, l'activation de la fonction demandée par le deuxième module de commande 32 si et seulement si la première durée T1 est supérieure ou égale au seuil prédéterminé et si aucun changement d'état du premier module de commande 31 n'a été détecté au cours de la deuxième durée T2, c'est à dire si aucun message d'état en cours d'activation du premier module de commande 31 n'a été envoyé et reçu par le boîtier de contrôle 35 entre la détection de l'état en cours d'activation et de l'état en cours de désactivation du deuxième module de commande 32.

Le procédé de filtrage selon l'invention permet avantageusement une liberté complète de l'implantation d'une pluralité d'écrans tactiles dans l'habitacle du véhicule, par exemple en positionnant une pluralité d'écrans tactiles proches les uns des autres. Un tel procédé permet également l'utilisation d'un deuxième écran tactile comme repose poignet, sans risquer l'activation involontaire d'une fonction installée sur un tel deuxième écran. En outre, le procédé selon l'invention permet l'intégration d'un système de commande tel que décrit précédemment, sans nécessiter l'ajout de capteurs spécifiques supplémentaires, permettant un filtrage des commandes du deuxième écran tactile ne présentant pas de surcoût.

## Revendications

1. Procédé de filtrage des commandes d'un système de commande (3) pour véhicule (1), notamment pour véhicule (1) automobile, ledit système de commande (3) comprenant :
- un premier module de commande (31) comprenant un premier écran tactile (33), ledit premier module de commande (31) étant configuré pour permettre la commande d'une première pluralité de fonctions du véhicule (1),
- un deuxième module de commande (32) comprenant un deuxième écran tactile (34), ledit deuxième module de commande (32) étant configuré pour permettre la commande d'une deuxième pluralité de fonctions du véhicule (1), et
- un boîtier de contrôle (35) relié électroniquement au premier module de commande (31) et au deuxième module de commande (32), ledit boîtier de contrôle (35) étant configuré pour permettre la commande des fonctions de la première pluralité de fonctions et de la deuxième pluralité de fonctions,
ledit procédé de filtrage comprenant les étapes suivantes :
- l'envoi (E1) par le premier module de commande (31) d'un premier message dit « premier message d'état » comprenant un état dudit premier module de commande (31), ledit état étant un état en cours d'activation correspondant au démarrage d'un appui, un état actif correspondant à un appui en cours, un état en cours de désactivation correspondant à une fin d'appui ou un état inactif correspondant à aucun appui en cours,
- la réception (E2), par le boîtier de contrôle (35), dudit premier message d'état,
- la détection (E3), par le boîtier de contrôle (35), dudit état en cours de désactivation du premier module de commande (31),
- après une première durée (T1), l'envoi (E4) par le deuxième module de commande (32) d'un deuxième message, dit « deuxième message d'état » comprenant un état dudit deuxième module de commande (32), ledit état étant un état actif, un état en cours d'activation, un état en cours de désactivation ou un état inactif,
- la réception (E5), par le boîtier de contrôle (35), dudit deuxième message d'état,
- la détection (E6), par le boîtier de contrôle (35), dudit état en cours d'activation du deuxième module de commande (32),
- après une deuxième durée (T2) prédéterminée, l'envoi (E7) par le deuxième module de commande (32) d'un troisième message, dit « troisième message d'état » comprenant un état dudit deuxième module de commande (32), ledit état étant un état actif, un état en cours d'activation, un état de fin d'activation ou un état inactif,
- la réception (E8), par le boîtier de contrôle (35), dudit troisième message d'état,
- la détection (E9), par le boîtier de contrôle (35), dudit état en cours de désactivation du deuxième module de commande (32),
- après la détection de l'état en cours d'activation et, après ladite deuxième durée (T2), de l'état en cours de désactivation du deuxième module de commande (32), la détection (E10) d'une demande d'activation d'une fonction sur le deuxième module de commande (32), et
- l'autorisation (E14) d'activation de ladite fonction, par le boîtier de contrôle (35), si et seulement si la première durée (T1) est supérieure ou égale à un seuil prédéterminé et si aucun état en cours d'activation n'a été détecté sur le premier module de commande (31) pendant ladite deuxième durée (T2).

2. Procédé selon la revendication précédente, dans lequel le seuil prédéterminé est compris entre 200 millisecondes et 1 seconde.

3. Procédé selon l'une des revendications précédentes, comprenant précédemment à l'étape d'autorisation (E14) d'activation de la fonction, par le boîtier de contrôle (35), une étape de comparaison (E13) par le boîtier de contrôle (35) de la première durée (T1) avec ledit seuil prédéterminé.

4. Procédé selon l'une des revendications précédentes, dans lequel le deuxième module de commande (32) comprenant une pluralité de zones tactiles, ledit procédé comprend postérieurement à l'étape de détection (E10) d'une demande d'activation d'une fonction sur le deuxième module de commande (32), une étape de détection (E11) d'une zone tactile comprenant ladite fonction.

5. Procédé selon la revendication précédente, comprenant postérieurement à l'étape de détection (E11) d'une zone tactile comprenant ladite fonction, une étape de détermination (E12) dudit seuil prédéterminé en fonction de ladite zone tactile détectée.

6. Système de commande (3) pour véhicule (1), notamment pour véhicule (1) automobile, ledit système de commande (3) comprenant :
- un premier module de commande (31) comprenant un premier écran tactile (33), ledit premier module de commande (31) étant configuré pour permettre la commande d'une première pluralité de fonctions du véhicule (1),
- un deuxième module de commande (32) comprenant un deuxième écran tactile (34), le deuxième module de commande (32) étant configuré pour permettre la commande d'une deuxième pluralité de fonctions du véhicule (1), et
- un boîtier de contrôle (35) relié électroniquement au premier module de commande (31) et au deuxième module de commande (32), ledit boîtier de contrôle (35) étant configuré pour permettre la commande des fonctions de la première pluralité de fonctions et de la deuxième pluralité de fonctions,
le boîtier de contrôle (35) étant configuré pour :
• recevoir un premier message dit « premier message d'état » comprenant un état dudit premier module de commande (31), un deuxième message dit « deuxième message d'état » et un troisième message dit « troisième message d'état » comprenant chacun un état dudit deuxième module de commande (32), le deuxième message d'état et le troisième message d'état étant espacés d'une deuxième durée (T2), ledit état étant un état en cours d'activation correspondant au démarrage d'un appui, un état actif correspondant à un appui en cours, un état en cours de désactivation correspondant à une fin d'appui, ou un état inactif correspondant à aucun appui en cours,
• déterminer l'état du premier module de commande (31) et chaque état du deuxième module de commande (32),
• détecter un état en cours de désactivation du premier module de commande (31), un état en cours d'activation du deuxième module de commande (32) et un état en cours de désactivation du deuxième module de commande (32),
• déterminer une première durée (T1) entre la détection de l'état en cours de désactivation du premier module de commande (31) et l'état en cours d'activation du deuxième module de commande (32),
• détecter une demande d'activation d'une fonction sur le deuxième module de commande (32), et
• autoriser l'activation de ladite fonction si et seulement si la première durée (T1) est supérieure ou égale à un seuil prédéterminé et si aucun message d'état en cours d'activation n'a été détecté sur le premier module de commande (31) pendant ladite deuxième durée (T2).

7. Système de commande (3) selon la revendication précédente, dans lequel le deuxième module de commande (32) comprenant une pluralité de zones tactiles, ledit système de commande (3) est en outre configuré pour détecter une zone tactile comprenant ladite fonction.

8. Système de commande (3) selon la revendication 7, dans lequel le boîtier de contrôle (35) est en outre configuré pour déterminer le seuil prédéterminé en fonction de ladite zone tactile détectée.

9. Système de commande (3) selon l'une des revendications 6 à 8, dans lequel le boîtier de contrôle (35) est en outre configuré pour comparer la première durée (T1) avec ledit seuil prédéterminé.

10. Véhicule (1) automobile comprenant un système de commande (3) selon l'une des revendications 6 à 9.

## Patentansprüche

1. Verfahren zum Filtern der Befehle eines Steuersystems (3) für ein Fahrzeug (1), insbesondere für ein Kraftfahrzeug (1), wobei das Steuersystem (3) umfasst:
- ein erstes Steuermodul (31), das einen ersten Touchscreen (33) umfasst, wobei das erste Steuermodul (31) so konfiguriert ist, dass es die Steuerung einer ersten Vielzahl von Funktionen des Fahrzeugs (1) ermöglicht,
- ein zweites Steuermodul (32), das einen zweiten Touchscreen (34) umfasst, wobei das zweite Steuermodul (32) so konfiguriert ist, dass es die Steuerung einer zweiten Vielzahl von Funktionen des Fahrzeugs (1) ermöglicht, und
- eine Steuereinheit (35), die elektronisch mit dem ersten Steuermodul (31) und dem zweiten Steuermodul (32) verbunden ist, wobei die Steuereinheit (35) so konfiguriert ist, dass sie die Steuerung der Funktionen der ersten Vielzahl von Funktionen und der zweiten Vielzahl von Funktionen ermöglicht,
wobei das Filterverfahren die folgenden Schritte umfasst:
- das Senden (E1) durch das erste Steuermodul (31) einer ersten Nachricht, die als "erste Statusnachricht" bezeichnet wird und einen Status des ersten Steuermoduls (31) umfasst, wobei der Status ein aktivierter Zustand ist, der dem Start einer Betätigung entspricht, ein aktiver Zustand, der einer laufenden Betätigung entspricht, ein deaktivierter Zustand, der einem Ende einer Betätigung entspricht, oder ein inaktiver Zustand, der keiner laufenden Betätigung entspricht,
- das Empfangen (E2) der ersten Statusmeldung durch die Steuereinheit (35),
- die Erfassung (E3), durch die Steuerbox (35), des besagten aktuellen Zustands der Deaktivierung des ersten Steuermoduls (31),
- nach einer ersten Zeitdauer (T1), das Senden (E4) einer zweiten Nachricht durch das zweite Steuermodul (32), genannt "zweite Statusnachricht", die einen Status des zweiten Steuermoduls (32) umfasst, wobei der Status ein aktiver Status, ein Status, der gerade aktiviert wird, ein Status, der gerade deaktiviert wird, oder ein inaktiver Status ist,
- das Empfangen (E5), durch die Steuereinheit (35), der zweiten Statusmeldung,
- das Erfassen (E6), durch die Steuerbox (35), des besagten Zustands, der gerade aktiviert wird, des zweiten Steuermoduls (32),
- nach einer zweiten vorbestimmten Zeitdauer (T2), das Senden (E7) einer dritten Nachricht durch das zweite Steuermodul (32), genannt "dritte Zustandsnachricht", die einen Zustand des zweiten Steuermoduls (32) umfasst, wobei der Zustand ein aktiver Zustand, ein Zustand während der Aktivierung, ein Zustand am Ende der Aktivierung oder ein inaktiver Zustand ist,
- das Empfangen (E8), durch die Steuereinheit (35), der dritten Statusmeldung,
- das Erfassen (E9), durch die Steuerbox (35), des genannten Zustands während der Deaktivierung des zweiten Steuermoduls (32),
- nach der Erkennung des aktuellen Aktivierungszustands und, nach der zweiten Zeitdauer (T2), des aktuellen Deaktivierungszustands des zweiten Steuermoduls (32), die Erkennung (E10) einer Anforderung zur Aktivierung einer Funktion auf dem zweiten Steuermodul (32), und
- die Genehmigung (E14) der Aktivierung der Funktion durch die Steuereinheit (35), wenn und nur wenn die erste Dauer (T1) größer oder gleich einem vorbestimmten Schwellenwert ist und wenn während der zweiten Dauer (T2) kein gerade aktivierter Zustand auf dem ersten Steuermodul (31) erfasst wurde.

2. Verfahren nach dem vorhergehenden Anspruch, wobei der vorbestimmte Schwellenwert zwischen 200 Millisekunden und 1 Sekunde liegt.

3. Verfahren nach einem der vorhergehenden Ansprüche, das vor dem Schritt des Autorisierens (E14) der Aktivierung der Funktion durch die Steuereinheit (35) einen Schritt des Vergleichens (E13) der ersten Dauer (T1) mit dem vorbestimmten Schwellenwert durch die Steuereinheit (35) umfasst.

4. Verfahren nach einem der vorhergehenden Ansprüche, wobei das zweite Steuermodul (32) eine Vielzahl von taktilen Zonen umfasst, wobei das Verfahren nach dem Schritt des Erfassens (E10) einer Anforderung zur Aktivierung einer Funktion auf dem zweiten Steuermodul (32) einen Schritt des Erfassens (E11) einer taktilen Zone umfasst, die die Funktion umfasst.

5. Verfahren nach dem vorhergehenden Anspruch, das nach dem Schritt des Erfassens (E11) eines taktilen Bereichs, der die Funktion umfasst, einen Schritt des Bestimmens (E12) des vorbestimmten Schwellenwerts in Abhängigkeit von dem erfassten taktilen Bereich umfasst.

6. Steuersystem (3) für ein Fahrzeug (1), insbesondere für ein Kraftfahrzeug (1), wobei das Steuersystem (3) umfasst:
- ein erstes Steuermodul (31), das einen ersten Touchscreen (33) umfasst, wobei das erste Steuermodul (31) so konfiguriert ist, dass es die Steuerung einer ersten Vielzahl von Funktionen des Fahrzeugs (1) ermöglicht,
- ein zweites Steuermodul (32), das einen zweiten Touchscreen (34) umfasst, wobei das zweite Steuermodul (32) so konfiguriert ist, dass es die Steuerung einer zweiten Vielzahl von Funktionen des Fahrzeugs (1) ermöglicht, und
- eine Steuereinheit (35), die elektronisch mit dem ersten Steuermodul (31) und dem zweiten Steuermodul (32) verbunden ist, wobei die Steuereinheit (35) so konfiguriert ist, dass sie die Steuerung der Funktionen aus der ersten Vielzahl von Funktionen und der zweiten Vielzahl von Funktionen ermöglicht,
wobei die Steuerbox (35) konfiguriert ist, um :
- eine erste Nachricht, die als "erste Statusnachricht" bezeichnet wird und einen Zustand des ersten Steuermoduls (31) umfasst, eine zweite Nachricht, die als "zweite Statusnachricht" bezeichnet wird, und eine dritte Nachricht, die als "dritte Statusnachricht" bezeichnet wird und jeweils einen Zustand des zweiten Steuermoduls (32) umfasst, zu empfangen, wobei die zweite Zustandsmeldung und die dritte Zustandsmeldung durch eine zweite Dauer (T2) voneinander getrennt sind, wobei der Zustand ein aktivierter Zustand ist, der dem Start einer Betätigung entspricht, ein aktiver Zustand, der einer laufenden Betätigung entspricht, ein deaktivierter Zustand, der einem Ende einer Betätigung entspricht, oder ein inaktiver Zustand, der keiner laufenden Betätigung entspricht,
- den Zustand des ersten Steuermoduls (31) und jeden Zustand des zweiten Steuermoduls (32) zu bestimmen,
- einen Zustand während der Deaktivierung des ersten Steuermoduls (31), einen Zustand während der Aktivierung des zweiten Steuermoduls (32) und einen Zustand während der Deaktivierung des zweiten Steuermoduls (32) zu erfassen,
- Bestimmen einer ersten Zeitdauer (T1) zwischen dem Erfassen des Zustands während der Deaktivierung des ersten Steuermoduls (31) und des Zustands während der Aktivierung des zweiten Steuermoduls (32),
- Erfassen einer Anforderung zur Aktivierung einer Funktion auf dem zweiten Steuermodul (32), und
- die Aktivierung der Funktion zuzulassen, wenn und nur wenn die erste Zeitdauer (T1) größer oder gleich einem vorbestimmten Schwellenwert ist und wenn während der zweiten Zeitdauer (T2) keine Meldung über den Status während der Aktivierung auf dem ersten Steuermodul (31) erfasst wurde.

7. Steuersystem (3) nach dem vorhergehenden Anspruch, wobei das zweite Steuermodul (32) eine Vielzahl von Berührungsflächen umfasst, wobei das Steuersystem (3) ferner so konfiguriert ist, dass es eine Berührungsfläche erfasst, die die Funktion umfasst.

8. Steuersystem (3) nach Anspruch 7, wobei die Steuereinheit (35) ferner so konfiguriert ist, dass sie den vorbestimmten Schwellenwert in Abhängigkeit von dem erfassten taktilen Bereich bestimmt.

9. Steuersystem (3) nach einem der Ansprüche 6 bis 8, wobei die Steuerbox (35) weiterhin so konfiguriert ist, dass sie die erste Zeitdauer (T1) mit dem vorbestimmten Schwellenwert vergleicht.

10. Kraftfahrzeug (1) mit einem Steuersystem (3) nach einem der Ansprüche 6 bis 9.

## Claims

1. Method for filtering the commands of a control system (3) for a vehicle (1), in particular for a motor vehicle (1), said control system (3) comprising :
- a first control module (31) comprising a first touch screen (33), said first control module (31) being configured to allow the control of a first plurality of functions of the vehicle (1)
- a second control module (32) comprising a second touch screen (34), said second control module (32) being configured to allow control of a second plurality of functions of the vehicle (1), and
- a control box (35) electronically connected to the first control module (31) and the second control module (32), said control box (35) being configured to allow control of the first plurality of functions and the second plurality of functions,
said filtering method comprising the following steps
- the sending (E1) by the first control module (31) of a first message called "first status message" comprising a status of said first control module (31), said status being a status in the process of being activated corresponding to the start of a press, an active status corresponding to a press in progress, a status in the process of being deactivated corresponding to an end of a press or an inactive status corresponding to no press in progress
- the reception (E2), by the control box (35), of said first status message,
- the detection (E3), by the control box (35), of said deactivation state of the first control module (31),
- after a first duration (T1), the sending (E4) by the second control module (32) of a second message, called "second status message" comprising a status of said second control module (32), said status being an active status, a status in the process of being activated, a status in the process of being deactivated or an inactive status
- receiving (E5), by the control box (35), said second status message
- detection (E6), by the control box (35), of said state being activated of the second control module (32),
- after a second predetermined period of time (T2), the sending (E7) by the second control module (32) of a third message, known as a "third status message", comprising a status of the said second control module (32), the said status being an active status, a status in the process of being activated, an end of activation status or an inactive status
- receiving (E8), by the control box (35), said third status message
- detection (E9), by the control box (35), of said state in the process of deactivation of the second control module (32),
- after the detection of the state being activated and, after said second duration (T2), of the state being deactivated of the second control module (32), the detection (E10) of a request to activate a function on the second control module (32), and
- authorising (E14) the activation of said function, by the control box (35), if and only if the first duration (T1) is greater than or equal to a predetermined threshold and if no state in the process of activation has been detected on the first control module (31) during said second duration (T2).

2. The method according to the preceding claim, wherein the predetermined threshold is between 200 milliseconds and 1 second.

3. A method according to any of the preceding claims, comprising previously to the step of authorising (E14) the activation of the function, by the control box (35), a step of comparison (E13) by the control box (35) of the first duration (T1) with said predetermined threshold.

4. Method according to one of the preceding claims, in which the second control module (32) comprising a plurality of tactile zones, said method comprises, subsequent to the step of detecting (E10) a request for activation of a function on the second control module (32), a step of detecting (E11) a tactile zone comprising said function

5. Method according to the preceding claim, comprising, subsequent to the step of detecting (E11) a tactile zone comprising said function, a step of determining (E12) said predetermined threshold as a function of said detected tactile zone.

6. A control system (3) for a vehicle (1), in particular for a motor vehicle (1), said control system (3) comprising :
- a first control module (31) comprising a first touch screen (33), said first control module (31) being configured to allow the control of a first plurality of functions of the vehicle (1)
- a second control module (32) comprising a second touch screen (34), the second control module (32) being configured to allow control of a second plurality of functions of the vehicle (1), and
- a control box (35) electronically connected to the first control module (31) and the second control module (32), said control box (35) being configured to allow control of the first plurality of functions and the second plurality of functions,
the control box (35) being configured to :
- receiving a first message called "first status message" comprising a status of said first control module (31), a second message called "second status message" and a third message called "third status message" each comprising a status of said second control module (32) the second status message and the third status message being spaced apart by a second duration (T2), said status being a state in the process of being activated corresponding to the start of a press, an active state corresponding to a press in progress, a state in the process of being deactivated corresponding to an end of a press, or an inactive state corresponding to no press in progress,
- determining the state of the first control module (31) and each state of the second control module (32)
- detecting a deactivation state of the first control module (31), an activation state of the second control module (32) and a deactivation state of the second control module (32),
- determining a first time period (T1) between the detection of the currently deactivated state of the first control module (31) and the currently activated state of the second control module (32)
- detecting a request to activate a function on the second control module (32), and
- allowing the activation of said function if and only if the first time period (T1) is greater than or equal to a predetermined threshold and if no status message being activated has been detected on the first control module (31) during said second time period (T2).

7. The control system (3) according to the preceding claim, wherein the second control module (32) comprising a plurality of touch areas, said control system (3) is further configured to detect a touch area comprising said function.

8. The control system (3) according to claim 7, wherein the control box (35) is further configured to determine the predetermined threshold based on said detected touch area.

9. The control system (3) according to any of claims 6 to 8, wherein the control box (35) is further configured to compare the first time period (T1) with said predetermined threshold.

10. A motor vehicle (1) comprising a control system (3) according to any of claims 6 to 9.
